# EUROPEAN PATENT SPECIFICATION

(11) **EP 1 323 783 B1**
(45) Date of publication and mention of the grant of the patent: **19.05.2010**
(21) Application number: 02256107.0
(22) Date of filing: 03.09.2002
(51) Int. Cl.: C09C 1/30, C01B 33/113, H01M 4/04, H01M 4/48, H01M 10/05

(54) **Conductive silicon oxide powder, preparation thereof, and negative electrode material for non-aqueous electrolyte secondary cell**
Leitfähiges Siliziumoxidpulver, dessen Herstellung, und negatives Elektrodenmaterial für nicht-wässrige Elektrolyt-Sekundärbatterie
Poudre conductrice d'oxyde de silicium, sa préparation et matière d'électrode négative pour pile secondaire à électrolyte non-aqueux

(30) Priority: 26.12.2001 JP 2001393149; 12.04.2002 JP 2002110194; 05.06.2002 JP 2002164366
(43) Date of publication of application: 02.07.2003
(73) Proprietor: Shin-Etsu Chemical Co., Ltd., Chiyoda-ku, Tokyo (JP)
(72) Inventor: Fukuoka, Hirofumi, c/o Gunma Complex, Annaka-shi, Gunma-ken (JP); Miyawaki, Satoru, c/o Gunma Complex, Annaka-shi, Gunma-ken (JP); Momii, Kazuma, c/o Gunma Complex, Annaka-shi, Gunma-ken (JP); Aramata, Mikio, c/o Gunma Complex, Annaka-shi, Gunma-ken (JP); Ueno, Susumu, c/o Takefu Plant, Takefu-shi, Fukui-ken 915-8515 (JP)
(74) Representative: Stoner, Gerard Patrick

(56) References cited:
- EP-A- 0 845 828
- EP-A- 1 024 544
- US-A1- 2001 012 503
- PATENT ABSTRACTS OF JAPAN vol. 2000, no. 24, 11 May 2001 (2001-05-11) & JP 2001 185125 A (DENKI KAGAKU KOGYO KK), 6 July 2001 (2001-07-06)
- PATENT ABSTRACTS OF JAPAN vol. 2002, no. 06, 4 June 2002 (2002-06-04) & JP 2002 042806 A (JAPAN STORAGE BATTERY CO LTD), 8 February 2002 (2002-02-08)

## Description

This invention relates to a silicon oxide powder endowed with electro-conductivity useful as the negative electrode active material in lithium ion secondary cells, a method for preparing the same, and a negative electrode material for use in non-aqueous electrolyte secondary cells.

### BACKGROUND

With the recent rapid progress of portable electronic equipment and communication equipment, secondary batteries having a high energy density are strongly desired from the standpoints of economy and size and weight reduction. Prior art known attempts for increasing the capacity of such secondary batteries include the use as the negative electrode material of oxides of V, Si, B, Zr, Sn or the like or compound oxides thereof (JP-A 5-174818, JP-A 6-60867 corresponding to USP 5,478,671), melt quenched metal oxides (JP-A 10-294112), silicon oxide (Japanese Patent No. 2,997,741 corresponding to USP 5,395,711), and Si₂N₂O or Ge₂N₂O (JP-A 11-102705 corresponding to USP 6,066,414).
Also, for the purpose of imparting conductivity to the negative electrode material, mechanical alloying of SiO with graphite followed by carbonization (JP-A 2000-243396 corresponding to EP 1,032,062) and coating of Si particle surfaces with a carbon layer by chemical vapor deposition (JP-A 2000-215887 corresponding to USP 6,383,686) are known.

These prior art methods are successful in increasing the charge/discharge capacity and the energy density of secondary batteries, but fall short of the market demand partially because of unsatisfactory cycle performance. There is a demand for further improvement in energy density.

More particularly, Japanese Patent No. 2,997,741 describes a high capacity electrode using silicon oxide as the negative electrode material in a lithium ion secondary cell. As long as the present inventors have empirically confirmed, the performance of this cell is yet unsatisfactory due to an increased irreversible capacity on the first charge/discharge cycle and a practically unacceptable level of cycle performance. With respect to the technique of imparting conductivity to the negative electrode material, JP-A 2000-243396 provides insufficient conductivity since a uniform carbon coating is not formed due to solid-solid fusion. JP-A 2000-215887 is successful in forming a uniform carbon coating, but the negative electrode material based on silicon experiences extraordinary expansion and contraction upon absorption and desorption of lithium ions and as a result, fails to withstand practical service. At the same time, the cycle performance declines, and the charge/discharge quantity must be limited in order to prevent such decline.

It would be desirable to provide a new conductive silicon oxide powder which is useful as a negative electrode active material to construct a lithium ion secondary cell having a high capacity with low or minimized cycling loss and capable of operation on the practical level. Other aspects are a method for preparing the powder, a negative electrode material suitable for use in non-aqueous electrolyte secondary cells, and the cells themselves.

The inventors made extensive investigations on silicon oxide which is deemed to potentially provide a high capacity, and analyzed the degradation mechanism of cycle performance. It was found that the cycle performance degrades because the contact of silicon oxide with the conductor becomes loosened as the electrode undergoes expansion and contraction upon absorption and desorption of lithium ions, so that the electrode lowers its conductivity. More particularly, when silicon oxide is used as the negative electrode material, graphite is added as a conductor to silicon oxide which itself is an insulator. In the initial state, silicon oxide and the conductor form a conductive network. As charge/discharge is repeated, the electrode itself undergoes repetitive expansion and contraction, whereby the conductive network is disrupted.
As a result, the cycle performance declines. Making investigations on the means of maintaining the conductive network without detracting from the conductivity of the electrode, the inventors have found that if silicon oxide itself is endowed with conductivity, then the resulting electrode can maintain its own conductivity even after repetitive expansion and contraction in response to charge/discharge operations, and as a result, a lithium ion secondary cell using this electrode can have good cycle performance. The present invention is predicated on this finding.

In a first aspect, the invention provides a conductive silicon oxide powder in which particles of silicon oxide having the general formula: SiOx wherein 1 ≤ x < 1.6 are covered on their surfaces with a conductive coating by chemical vapor deposition treatment.

According to a second aspect of the invention, the conductive silicon oxide powder is prepared by heat treating particles of silicon oxide having the general formula: SiOx wherein 1 ≤ x < 1.6 in an atmosphere containing at least an organic gas or vapor at a temperature of 500 to 1,200°C.

In a third aspect, the invention provides a negative electrode material for a non-aqueous electrolyte secondary cell, comprising the conductive silicon oxide powder.

### BRIEF DESCRIPTION OF THE DRAWING

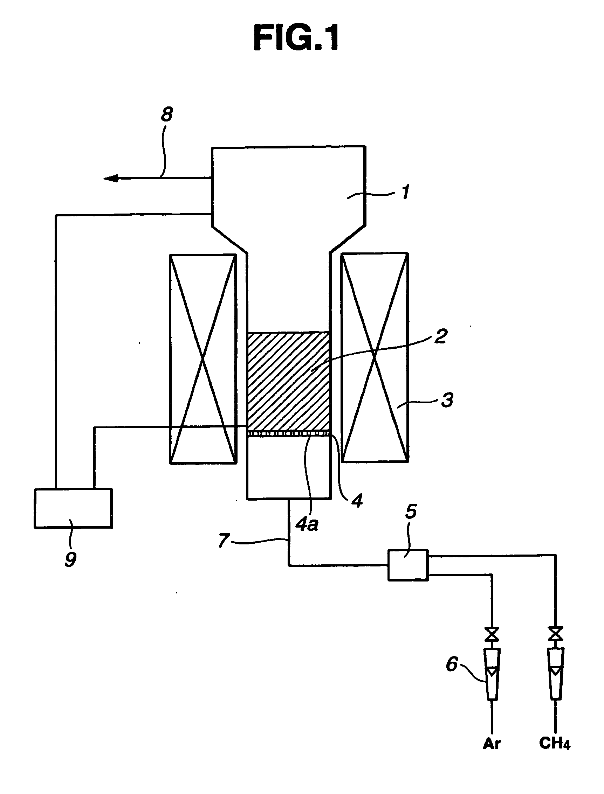

FIG. 1 schematically illustrates one exemplary fluidized bed reactor system used in the invention.

### FURTHER EXPLANATIONS; OPTIONS AND PREFERENCES

As used herein, the term "silicon oxide powder" or "particles of silicon oxide" generally designates amorphous silicon oxides such as produced using silicon dioxide (SiO₂) and metallic silicon (Si) as raw materials. The powder or particles are of silicon oxide having the general formula: SiOx wherein x is desirably in the range: 1 ≤ x < 1.6, more desirably 1.0 ≤ x < 1.3, while general physical properties thereof are not critical. SiOx powder with x of less than 1 is rarely available because of difficulty of manufacture. SiOx powder with x of 1.6 or more, because of a higher proportion of inactive SiO₂, leads to a lowering of charge/discharge capacity when used as the negative electrode material in a lithium ion secondary cell.

The SiOx used herein is preferably a silicon oxide containing active atomic silicon. When particles of SiOx are analyzed by solid-state NMR (²⁹Si DD/MAS), the spectrum contains two separate peaks, a broad peak centering at -70 ppm, specifically a broad peak (A1) having an apex in the range between -65 ppm and -85 ppm, and another broad peak centering at -110 ppm, specifically another broad peak (A2) having an apex in the range between -100 ppm and -120 ppm. The area ratio of these peaks, A1/A2, desirably satisfies 0.1 ≤ A1/A2 ≤ 1.0, especially 0.2 ≤ A1/A2 ≤ 0.8. An area ratio A1/A2 of less than 0.1 indicates a higher proportion of inactive SiO₂, making it hard to construct a lithium ion secondary cell having a high capacity. On the other hand, an area ratio A1/A2 of more than 1.0 indicates a higher proportion of highly active amorphous Si, so that a lithium ion secondary cell obtained therefrom may have a high capacity, but cycle performance is not good.

Also preferably, the silicon oxide particles used herein have a weight average particle diameter D₅₀ of about 0.01 to 20 µm. It is noted that the average particle diameter D₅₀ is determined as a particle diameter at 50% by weight cumulative (or median diameter) upon measurement of particle size distribution by laser light diffractometry. The preferred weight average particle diameter D₅₀ is 0.01 to 10 µm, more preferably 0.02 to 5 µm, and especially 0.03 to 1 µm. Note: these upper and lower limits may be treated independently of one another.

The particle size range is selected because by previously grinding silicon oxide particles to the particle diameter beyond which further division does not proceed, in order to restrain division into a smaller size during charge/discharge cycles, and by uniformly coating surfaces of silicon oxide particles with carbon in order to impart conductivity to silicon oxide itself for maintaining the conductive network, a non-aqueous electrolyte secondary cell whose internal resistance is not high and whose cycle performance is satisfactory is obtained even when fine powdery silicon oxide is used. When charge/discharge cycles are repeated in a lithium ion secondary cell, silicon oxide particles with a weight average particle diameter of more than 10 µm can be finely divided, and an SEM observation of the electrode reveals the presence of more particles with a diameter of less than 2 µm. When silicon oxide is finely divided, surfaces not covered with a carbon coating newly develop, with a possibility that the cell's internal resistance increase and the cycle performance deteriorate. Silicon oxide particles with a weight average particle diameter of less than 0.01 µm tend to agglomerate during CVD treatment, with difficulty to cover with a uniform carbon coating.

To achieve the predetermined particle diameter, well-known grinding machines may be used. Use may be made of, for example, a ball mill and media agitating mill in which grinding media such as balls or beads are brought in motion and the charge (to be ground) is ground by utilizing impact forces, friction forces or compression forces generated by the kinetic energy; a roller mill in which grinding is carried out by compression forces generated between rollers; a jet mill in which the charge is impinged against the liner at a high speed, and grinding is carried out by impact forces generated by impingement; a hammer mill, pin mill and disc mill in which a rotor with hammers, blades or pins attached thereto is rotated and the charge is ground by impact forces generated by rotation; a colloid mill utilizing shear forces; and a wet, high pressure, counter-impingement dispersing machine "Ulthimaizer" (Sugino Machine Ltd.). Either wet or dry grinding may be employed although wet grinding in the co-presence of an organic solvent such as hexane is especially preferred for preventing silicon oxide from surface oxidation, maintaining a proportion of active Si, and maintaining a charge/discharge capacity.

The conductive silicon oxide powder of the invention is arrived at by covering surfaces of particles of silicon oxide having the general formula: SiOx wherein 1 ≤ x < 1.6 with a conductive coating by chemical vapor deposition (CVD) treatment. Since a conductive coating is formed by CVD treatment, silicon oxide particles can be entirely covered with uniform conductive coatings independent of the shape of particles. The conductive coating may be composed of a conductive material which does not undergo decomposition or alteration in the cell. Illustrative conductive materials include metals such as Al, Ti, Fe, Ni, Cu, Zn, Ag, and Sn, and carbon. Of these, the carbon coating is advantageous for ease of CVD treatment and conductivity.

Preferably, the amount of carbon coated or deposited on the conductive silicon oxide powder is 5 to 70% by weight based on the weight of the conductive silicon oxide powder, that is, silicon oxide powder whose particle surfaces are covered with conductive coatings by CVD treatment. The preferred carbon coating amount is 10 to 50% by weight and especially 15 to 50% by weight. With a carbon coating amount of less than 5% by weight, the silicon oxide is improved in conductivity, but may provide unsatisfactory cycle performance when assembled in a lithium ion secondary cell. A carbon coating amount of more than 70% by weight indicates a too high carbon content which may reduce the negative electrode capacity.

It is desired that the conductive silicon oxide powder have an electrical conductivity of at least 1×10⁻⁶ S/m, especially at least 1×10⁻⁴ S/m. With an electrical conductivity of less than 1×10⁻⁶ S/m, the electrode is less conductive and may provide degraded cycle performance when used as the negative electrode in a lithium ion secondary cell. As used herein, the "electrical conductivity" is determined by filling a four-terminal cylindrical cell with a powder to be tested, conducting current flow through the powder, and measuring the voltage drop thereacross.

Now, it is described how to prepare such a conductive silicon oxide powder.

The conductive silicon oxide powder is obtainable by heat treating particles of silicon oxide having the general formula: SiOx wherein 1 ≤ x < 1.6 in an atmosphere containing at least an organic gas or vapor at a temperature of 500 to 1,200°C, preferably 600 to 1,150°C, more preferably 700 to 1,000°C, for a predetermined time. At a heat treatment temperature below 500°C, a conductive carbon coating may not form or the heat treatment must be continued for a longer time, which is inefficient. When heat treatment is carried out at relatively high temperatures (for example, 1,000 to 1,200°C), the heat treatment must be completed within a short time, for example, within 2 hours, preferably within 1 hour. This is because SiOx powder can undergo disproportionation at high temperatures so that crystalline Si is admixed in the silicon oxide, which can reduce the charge/discharge capacity of a lithium ion secondary cell in which the resulting silicon oxide powder is used as the negative electrode material.

The organic material to generate the organic gas or vapor is selected from those materials capable of producing carbon (graphite) through pyrolysis at the heat treatment temperature (500 to 1200°C), especially in a non-oxidizing atmosphere. Exemplary are hydrocarbons such as methane, ethane, ethylene, acetylene, propane, butane, butene, pentane, isobutane, and hexane alone or in admixture of any, and monocyclic to tricyclic aromatic hydrocarbons such as benzene, toluene, xylene, styrene, ethylbenzene, diphenylmethane, naphthalene, phenol, cresol, nitrobenzene, chlorobenzene, indene, coumarone, pyridine, anthracene, and phenanthrene alone or in admixture of any. Also, gas light oil, creosote oil and anthracene oil obtained from the tar distillation step are useful as well as naphtha cracked tar oil, alone or in admixture.

For the heat treatment of silicon oxide particles (SiOx particles) with organic gas, any desired reactor having a heating mechanism may be used in a non-oxidizing atmosphere. Depending on a particular purpose, a reactor capable of either continuous or batchwise treatment may be selected from, for example, a fluidized bed reactor, rotary furnace, vertical moving bed reactor, tunnel furnace, batch furnace and rotary kiln. In the practice of the invention, a uniform conductive coating can be more readily formed by relying on fluidized bed reaction. The fluidizing gas used herein may be the aforementioned organic gas alone or in admixture with a non-oxidizing gas such as Ar, He, H₂ or N₂.

More efficiently the conductive coating is formed when the linear velocity u (m/sec) of fluidizing gas is selected such that its ratio to the minimum fluidization velocity u_{mf} is in the range 1.5 ≤ u/u_{mf} ≤ 5. With u/u_{mf} < 1.5, insufficient fluidization may result in variant conductive coatings. With u/u_{mf} > 5, on the other hand, secondary agglomeration of particles may occur, failing to form uniform conductive coatings. It is noted that the minimum fluidization velocity u_{mf} is dependent on the size of particles, treatment temperature, treatment atmosphere and the like. The minimum fluidization velocity u_{mf} is defined, in a test of gradually increasing the linear velocity of fluidizing gas to a powder bed, as the linear velocity of fluidizing gas when the pressure loss across the powder is equal to W/A wherein W is the weight of the powder and A is the cross-sectional area of the fluidized bed. The minimum fluidization velocity u_{mf} is usually 0.1 to 30 cm/sec, preferably 0.5 to 10 cm/sec. To achieve such a minimum fluidization velocity u_{mf}, the powder usually have a particle diameter of 0.5 to 100 µm, preferably 5 to 50 µm. A particle diameter of less than 0.5 µm has a risk of secondary agglomeration preventing surfaces of discrete particles from effective treatment. Particles with a diameter of more than 100 µm may be difficult to uniformly apply to the surface of a current collector in lithium ion secondary cells.

The conductive silicon oxide powder may be used as a negative electrode material, specifically a negative electrode active material to construct a non-aqueous electrolyte secondary cell having a high capacity and improved cycle performance, especially a lithium ion secondary cell.

The lithium ion secondary cell thus constructed is characterized by the use of the conductive silicon oxide powder as the negative electrode active material while the materials of the positive electrode, negative electrode, electrolyte, and separator and the cell design are not critical. For example, the positive electrode active material used herein may be selected from transition metal oxides such as LiCoO₂, LiNiO₂, LiMn₂O₄, V₂O₅, MnO₂, TiS₂ and MoS₂ and chalcogen compounds. The electrolytes used herein may be lithium salts such as lithium perchlorate in non-aqueous solution form. Examples of the non-aqueous solvent include propylene carbonate, ethylene carbonate, dimethoxyethane, γ-butyrolactone and 2-methyltetrahydrofuran, alone or in admixture. Use may also be made of other various non-aqueous electrolytes and solid electrolytes.

When a negative electrode is prepared using the inventive conductive silicon oxide powder, a conductive agent such as graphite may be added to the powder. The type of conductive agent used herein is not critical as long as it is an electronically conductive material which does not undergo decomposition or alteration in the cell. Illustrative conductive agents include metals in powder or fiber form such as Al, Ti, Fe, Ni, Cu, Zn, Ag, Sn and Si, natural graphite, synthetic graphite, various coke powders, meso-phase carbon, vapor phase grown carbon fibers, pitch base carbon fibers, PAN base carbon fibers, and graphite obtained by firing various resins.

When the conductive silicon oxide powder is mixed with the conductive agent, the amount of conductive agent is preferably 1 to 60% by weight, more preferably 10 to 50% by weight, even more preferably 20 to 50% by weight of the mixture. A mixture with less than 1% of the conductive agent may fail to withstand expansion and contraction on charge/discharge cycles, whereas a mixture with more than 60% of the conductive agent may have a reduced charge/discharge capacity. Also the mixture preferably have a total carbon content (i.e., the total of the amount of any carbon coated or deposited on the conductive silicon composite powder and any amount of carbon in the conductive agent) of 25 to 90% by weight, especially 30 to 50% by weight. A mixture with less than 25% by weight of carbon (the total carbon content) may fail to withstand expansion and contraction on charge/discharge cycles, whereas a mixture with more than 90% of carbon may have a reduced charge/discharge capacity.

### EXAMPLE

Examples of the invention are given below by way of illustration and not by way of limitation.

### Example 1

Using a batchwise fluidized bed reactor system shown in FIG. 1, a conductive silicon oxide powder was prepared by the method described below. The system of FIG. 1 includes a fluidized bed reactor 1 having a gas distributor 4 on which a fluidized bed 2 is formed, a heater 3 surrounding the reactor, and a gas feed line 7 having a gas blender 5 and flow meters 6. Ar and CH₄ gases are pumped by suitable means, metered by the flow meters 6, and mixed in the gas blender 5, from which the gas mixture is fed to the reactor 1 through the feed line 7 and injected into the reactor chamber through a plurality of orifice ports 4a in the gas distributor 4. With a silicon oxide powder admitted into the reactor chamber, the gas injection forms a fluidized bed 2 of silicon oxide powder. The reactor 1 is provided with a gas discharge line 8 and a differential pressure gauge 9.

### Preparation of starting silicon oxide powder

A powder mixture of a silicon dioxide powder (BET surface area = 200 m²/g) and a metallic silicon powder of the ceramics grade (BET surface area = 4 m²/g) in an equimolar ratio was heat treated in a hot vacuum atmosphere at 1,350°C and 0.1 Torr. The SiO gas generated was deposited on a stainless steel substrate which was water cooled. The deposit was collected and milled in hexane in a ball mill for 5 hours, yielding a silicon oxide powder (SiOx powder).

The resulting silicon oxide powder was a powder of SiOx wherein x = 1.05, having D₅₀ = 12 µm and an electrical conductivity of 3x10⁻⁹ S/m as measured by the four-terminal method. When the SiOx powder was analyzed by solid-state NMR (²⁹Si DD/MAS), the spectrum contained two separate peaks, a broad peak (A1) centering at -70 ppm and another broad peak (A2) centering at -110 ppm, and the area ratio A1/A2 of these peaks was 0.68. Note that D₅₀ is a weight average particle diameter determined as a particle diameter at 50% by weight cumulative upon measurement of particle size distribution by laser light diffractometry.

### Preparation of conductive silicon oxide powder (CVD treatment)

The starting silicon oxide powder SiOx, 200 g = W, was admitted into the reaction chamber of the fluidized bed reactor 1 having an inner diameter of 80 mm or a cross-sectional area A. Ar gas was fed through the flow meter 6 at a rate of 1.0 NL/min while the heater 3 was actuated to heat the reactor to 800°C at a heating rate of 300°C/hr and maintain the reactor at the temperature. After 800°C was reached, CH₄ gas was additionally fed at a rate of 0.2 NL/min, and the flow rate of the gas mixture of Ar and CH₄ gases in a ratio of 10:2 was gradually increased for determining the minimum fluidization velocity. As a result, with the setting of 1.5 NL/min Ar gas, 0.3 NL/min CH₄ gas, and 1.8 NL/min gas mixture, the differential pressure gauge 9 indicated a pressure of 390 Pa equal to W/A, from which the minimum fluidization velocity u_{mf} was computed to be 2.2 cm/s. Then the gas feeds were changed to an Ar gas flow rate of 3.0 NL/min, a CH₄ gas flow rate of 0.6 NL/min, and a linear velocity u of fluidizing gas of 4.4 cm/s so as to give u/u_{mf} = 2. Under the conditions, fluidized bed heat treatment was conducted for 3 hours. At the end of the run, the reactor was cooled and a black powder was recovered.
The black powder had an electrical conductivity of 5×10⁻¹ S/m as measured by the four-terminal method. It was an amorphous conductive silicon oxide powder having 14.0% by weight of carbon deposited thereon.

### Cell test

For evaluating the conductive silicon oxide powder, a lithium ion secondary cell was constructed and tested using the powder as the negative electrode active material.

A negative electrode material mixture was obtained by adding synthetic graphite (weight average particle diameter D₅₀ = 5 µm) to the conductive silicon oxide powder obtained above so as to give a total carbon content of 40% by weight (carbon of synthetic graphite plus carbon deposited on conductive silicon oxide powder). To the mixture, polyvinylidene fluoride was added in an amount of 10% of the resulting mixture. N-methylpyrrolidone was then added thereto to form a slurry. The slurry was coated onto a copper foil of 20 µm gage and dried at 120°C for one hour. Using a roller press, the coated foil was shaped under pressure into an electrode sheet, of which discs having a diameter of 20 mm were punched out as the negative electrode.

To evaluate the charge/discharge performance of the negative electrode, a test lithium ion secondary cell was constructed using a lithium foil as the counter electrode. The electrolyte solution used was a non-aqueous electrolyte solution of lithium phosphorus hexafluoride in a 1/1 (by volume) mixture of ethylene carbonate and 1,2-dimethoxyethane in a concentration of 1 mol/liter. The separator used was a microporous polyethylene film of 30 µm thick.

The lithium ion secondary cell thus constructed was allowed to stand overnight at room temperature. Using a secondary cell charge/discharge tester (Nagano K.K.), a charge/discharge test was carried out on the cell. Charging was conducted with a constant current flow of 1 mA until the voltage of the test cell reached 0 V, and after reaching 0 V, continued with a reduced current flow so that the cell voltage was kept at 0 V, and terminated when the current flow decreased below 20 µA. Discharging was conducted with a constant current flow of 1 mA and terminated when the cell voltage rose above 1.8 V, from which a discharge capacity was determined.

By repeating the above operations, the charge/discharge test on the lithium ion secondary cell was carried out 10 cycles. The test results included a first charge capacity of 1,210 mAh/g, a first discharge capacity of 850 mAh/g, an efficiency of first charge/discharge cycle of 70.2%, a discharge capacity on the 10th cycle of 840 mAh/g, and a capacity retentivity after 10 cycles of 98.8%, indicating that it was a lithium ion secondary cell having a high capacity and an improved first charge/discharge efficiency and cycle performance.

### Example 2

### Preparation of starting silicon oxide powder

A powder mixture of a silicon dioxide powder (BET surface area = 200 m²/g) and a metallic silicon powder of the ceramics grade (BET surface area = 4 m²/g) in an equimolar ratio was heat treated in a hot vacuum atmosphere at 1,350°C and 0.1 Torr. The SiO gas generated was deposited on a stainless steel substrate which was water cooled. The deposit was collected and milled in hexane in a ball mill. The milling time was suitably adjusted to yield a silicon oxide powder (SiOx powder) having D₅₀ = 0.8 µm.

The resulting silicon oxide powder was a powder of SiOx wherein x = 1.05, having an electrical conductivity of 3×10⁻⁹ S/m as measured by the four-terminal method. When the SiOx powder was analyzed by solid-state NMR (²⁹Si DD/MAS), the spectrum contained two separate peaks, a broad peak (A1) centering at -70 ppm and another broad peak (A2) centering at -110 ppm, and the area ratio A1/A2 of these peaks was 0.68.

### Preparation of conductive silicon oxide powder (CVD treatment)

The starting silicon oxide powder SiOx, 100 g = W, was admitted into the reaction chamber of the fluidized bed reactor 1 having an inner diameter of 80 mm or a cross-sectional area A. Ar gas was fed through the flow meter 6 at a rate of 1.0 NL/min while the heater 3 was actuated to heat the reactor to 1,000°C at a heating rate of 300°C/hr and maintain the reactor at the temperature. After 1,000°C was reached, CH₄ gas was additionally fed at a rate of 0.3 NL/min, and the flow rate of the gas mixture of Ar and CH₄ gases in a ratio of 10:3 was gradually increased for determining the minimum fluidization velocity. As a result, with the setting of 1.5 NL/min Ar gas, 0.45 NL/min CH₄ gas, and 1.95 NL/min gas mixture, the differential pressure gauge 9 indicated a pressure of 195 Pa equal to W/A, from which the minimum fluidization velocity u_{mf} was found to be 2.8 cm/s. Then the gas feeds were changed to an Ar gas flow rate of 3.0 NL/min, a CH₄ gas flow rate of 0.9 NL/min, and a linear velocity u of fluidizing gas of 5.6 cm/s so as to give u/u_{mf} = 2. Under the conditions, fluidized bed heat treatment was conducted for 1 hour. At the end of the run, the reactor was cooled and a black powder was recovered. The black powder had an electrical conductivity of 5×10⁻¹ S/m as measured by the four-terminal method. It was an amorphous conductive silicon oxide powder having 19.8% by weight of carbon deposited thereon.

### Cell test

For evaluating the conductive silicon oxide powder, a lithium ion secondary cell was constructed and tested using the powder as the negative electrode active material.

A negative electrode material mixture was obtained by adding synthetic graphite (weight average particle diameter D₅₀ = 5 µm) to the conductive silicon oxide powder obtained above so as to give a total carbon content of 40% by weight (carbon of synthetic graphite plus carbon deposited on conductive silicon oxide powder). To the mixture, polyvinylidene fluoride was added in an amount of 10% of the resulting mixture. N-methylpyrrolidone was then added thereto to form a slurry. The slurry was coated onto a copper foil of 20 µm gage and dried at 120°C for one hour. Using a roller press, the coated foil was shaped under pressure into an electrode sheet, of which 2 cm² discs were punched out as the negative electrode.

To evaluate the charge/discharge performance of the negative electrode, a test lithium ion secondary cell was constructed using a lithium foil as the counter electrode. The electrolyte solution used was a non-aqueous electrolyte solution of lithium phosphorus hexafluoride in a 1/1 (by volume) mixture of ethylene carbonate and 1,2-dimethoxyethane in a concentration of 1 mol/liter. The separator used was a microporous polyethylene film of 30 µm thick.

The lithium ion secondary cell thus constructed was allowed to stand overnight at room temperature. Using a secondary cell charge/discharge tester (Nagano K.K.), a charge/discharge test was carried out on the cell. Charging was conducted with a constant current flow of 3 mA until the voltage of the test cell reached 0 V, and after reaching 0 V, continued with a reduced current flow so that the cell voltage was kept at 0 V, and terminated when the current flow decreased below 100 µA. Discharging was conducted with a constant current flow of 3 mA and terminated when the cell voltage rose above 2.0 V, from which a discharge capacity was determined.

By repeating the above operations, the charge/discharge test on the lithium ion secondary cell was carried out 30 cycles. Table 1 reports the internal resistance and voltage prior to charge/discharge, first charge capacity, first discharge capacity, and capacity retentivity after 30 cycles.

### Example 3

The procedure of Example 2 was repeated except that changes were made to 3.3 NL/min Ar gas and 0.6 NL/min CH₄ gas (ratio of Ar gas to CH₄ gas 11:2) in the fluidized bed heat treatment in Example 2. The conductive silicon oxide powder thus obtained had an electrical conductivity of 5×10⁻¹ S/m and 10.3% by weight of carbon deposited thereon. Using this conductive silicon oxide powder, a cell was constructed and tested as in Example 2. The results are shown in Table 1.

### Example 4

The procedure of Example 2 was repeated except that the time of CVD treatment in Example 2 was changed to 2 hours. The conductive silicon oxide powder thus obtained had an electrical conductivity of 5×10⁻¹ S/m and 38.7% by weight of carbon deposited thereon.

The conductive silicon oxide powder alone was used as the negative electrode material, to which polyvinylidene fluoride was added in an amount of 10% of the resulting mixture. N-methylpyrrolidone was then added thereto to form a slurry. The slurry was coated onto a copper foil of 20 µm gage and dried at 120°C for one hour. Using a roller press, the coated foil was shaped under pressure into an electrode sheet, of which 2 cm² discs were punched out as the negative electrode. Using the negative electrode, a cell was constructed and tested as in Example 2. The results are shown in Table 1.

### Example 5

The procedure of Example 2 was repeated except that the milling time was changed, yielding a silicon oxide powder of SiOx wherein x = 1.05 having D₅₀ = 8 µm and an electrical conductivity of 3×10⁻⁹ S/m. CVD treatment was carried out as in Example 2, yielding an amorphous conductive silicon oxide powder having an electrical conductivity of 5×10⁻¹ S/m and 18.2% by weight of carbon deposited thereon. Using this conductive silicon oxide powder as the negative electrode material, a cell was constructed and tested as in Example 2. The results are shown in Table 1.

### Example 6

The procedure of Example 2 was repeated except that the temperature of CVD treatment in Example 2 was changed to 700°C, yielding a conductive silicon oxide powder having an electrical conductivity of 6×10⁻¹ S/m and 3.7% by weight of carbon deposited thereon. Using this conductive silicon oxide powder, a cell was constructed and tested as in Example 2. The results are shown in Table 1.

### Example 7

The procedure of Example 2 was repeated except that the milling time was changed, yielding a silicon oxide powder of SiOx wherein x = 1.05 having D₅₀ = 18 µm and an electrical conductivity of 3×10⁻⁹ S/m. CVD treatment was carried out on the silicon oxide powder as in Example 2, yielding an amorphous conductive silicon oxide powder having an electrical conductivity of 5×10⁻¹ S/m and 18.3% by weight of carbon deposited thereon. Using this conductive silicon oxide powder as the negative electrode material, a cell was constructed and tested as in Example 2. The results are shown in Table 1.

### Comparative Example 1

A conductive silicon oxide powder was prepared as in Example 1 except that the starting silicon oxide powder was SiOx wherein x = 1.7 having an electrical conductivity of 3×10⁻⁹ S/m. It was an amorphous silicon oxide powder having an electrical conductivity of 5×10⁻¹ S/m. Using this conductive silicon oxide powder as the negative electrode material, a cell was constructed and tested as in Example 1.

The test results included a first charge capacity of 620 mAh/g, a first discharge capacity of 420 mAh/g, an efficiency of first charge/discharge cycle of 67.7%, a discharge capacity on the 10th cycle of 410 mAh/g, and a capacity retentivity after 10 cycles of 97.6%, indicating that it was a lithium ion secondary cell having a lower capacity than Examples.

### Comparative Example 2

A conductive silicon oxide powder was prepared as in Example 1 except that the temperature of CVD treatment was 400°C. It was an amorphous silicon oxide powder having an electrical conductivity of 2×10⁻⁷ S/m. Using this conductive silicon oxide powder as the negative electrode material, a cell was constructed and tested as in Example 1.

The test results included a first charge capacity of 1,220 mAh/g, a first discharge capacity of 810 mAh/g, an efficiency of first charge/discharge cycle of 66.4%, a discharge capacity on the 10th cycle of 510 mAh/g, and a capacity retentivity after 10 cycles of 63.0%, indicating that it was a lithium ion secondary cell having poorer cycle performance than Examples.

### Comparative Example 3

A cell was constructed and tested as in Example 1 except that the SiOx powder (x = 1.05, electrical conductivity = 3×10⁻⁹ S/m) used in Example 1 was not subjected to CVD treatment.

The test results included a first charge capacity of 1,250 mAh/g, a first discharge capacity of 820 mAh/g, an efficiency of first charge/discharge cycle of 65.6%, a discharge capacity on the 10th cycle of 420 mAh/g, and a capacity retentivity after 10 cycles of 51.2%, indicating that it was a lithium ion secondary cell having apparently poorer cycle performance than Examples.

### Comparative Example 4

To 150 g of the SiOx powder (x = 1.05, electrical conductivity = 3×10⁻⁹ S/m) used in Example 1 was added 50 g of synthetic graphite (D₅₀ = 3 µm). After mixing, mechanical fusion treatment was carried out under the conditions shown below using a mechano-fusion apparatus AM-15 by Hosokawa Micron Co., Ltd. whereby synthetic graphite was fused to surfaces of SiOx particles.

### <Mechanical fusion treatment>

Atmosphere: N₂
Time: 30 minutes
Revolution: 2500 rpm

The SiOx powder resulting from mechanical fusion treatment had an electrical conductivity of 3×10⁻² S/m.

Using the mechanical fusion treated SiOx powder as the negative electrode material, a cell was constructed and tested as in Example 1. The test results included a first charge capacity of 1,230 mAh/g, a first discharge capacity of 820 mAh/g, an efficiency of first charge/discharge cycle of 66.7%, a discharge capacity on the 10th cycle of 750 mAh/g, and a capacity retentivity after 10 cycles of 91.5%, indicating that it was a lithium ion secondary cell having poorer cycle performance than Examples.

### Comparative Example 5

A cell was constructed and tested as in Example 2 except that the SiOx powder (x = 1.05, electrical conductivity = 3×10⁻⁹ S/m) used in Example 2 was not subjected to CVD treatment. The results are shown in Table 1.

**Table 1**

| | Example | | | | | | Comparative Example |
|---|---|---|---|---|---|---|---|
| | 2 | 3 | 4 | 5 | 6 | 7 | 5 |
| D₅₀ of silicon oxide powder as milled (µm) | 0.8 | 0.8 | 0.8 | 8 | 0.8 | 18 | 0.8 |
| D₅₀ of conductive silicon oxide powder as CVD treated (µm) | 2.3 | 2.2 | 4.6 | 9.6 | 1.5 | 19 | |
| Carbon deposited (wt%) | 19.8 | 10.3 | 38.7 | 18.2 | 3.7 | 18.3 | nil |
| Internal resistance/ voltage of cell prior to charge/discharge (Ω/V) | 16.5/2.9 | 16.7/2.9 | 15.9/2.9 | 16.7/2.9 | 18.0/2.9 | 16.7/2.9 | 24.0/2.9 |
| First charge capacity (mAh/g) | 1250 | 1260 | 1170 | 1250 | 1270 | 1230 | 1127 |
| First discharge capacity (mAh/g) | 855 | 845 | 809 | 845 | 850 | 850 | 615 |
| Capacity retentivity after 30 cycles (%) | 98 | 91 | 97 | 90 | 60 | 63 | 24 |

It is evident that lithium ion secondary cells using the conductive silicon oxide powders of the invention as the negative electrode material had a high capacity and improved cycle performance.

When used as the negative electrode active material, the conductive silicon oxide powder of the invention can enable the construction of lithium ion secondary cells having a high capacity and improved cycle performance. The method of imparting conductivity to silicon oxide particles is simple and efficient enough to manufacture on an industrial scale.

Although some preferred embodiments have been described, many modifications and variations may be made thereto in light of the above teachings. It is therefore to be understood that the invention may be practiced otherwise than as specifically described in the Examples.

## Claims

1. A conductive silicon oxide powder in which particles of silicon oxide having the general formula: SiOx wherein 1 ≤ x < 1.6 are covered on their surfaces with a conductive coating by chemical vapor deposition treatment.

2. The conductive silicon oxide powder of claim 1 wherein when the particles of silicon oxide are analyzed by solid-state NMR (²⁹Si DD/MAS), the spectrum contains two separate peaks, a broad peak (A1) centering at -70 ppm and another broad peak (A2) centering at -110 ppm, and an area ratio of these peaks is in the range: 0.1 ≤ A1/A2 ≤ 1.0.

3. Conductive silicon oxide powder of claim 1 or 2 wherein the particles of silicon oxide have a weight average particle diameter D₅₀ of 0.01 to 10 µm.

4. Conductive silicon oxide powder of claim 1, 2 or 3 wherein the conductive coating is a carbon coating.

5. The conductive silicon oxide powder of claim 4 wherein the amount of carbon coated is 5 to 70% by weight of the conductive silicon oxide powder.

6. A powder according to any one of the preceding claims having an electrical conductivity of at least 1x10⁻⁶ S/m.

7. A negative electrode material for a non-aqueous electrolyte secondary cell, comprising the conductive silicon oxide powder of any one of claims 1 to 6.

8. A negative electrode material for a non-aqueous electrolyte secondary cell, comprising a mixture of the conductive silicon oxide powder of any one of claims 1 to 6 and 1 to 60% by weight of a conductive agent, the mixture having a total carbon content of 25 to 90% by weight.

9. A method for preparing the conductive silicon oxide powder according to any one of claims 1 to 6 comprising the step of heat treating particles of silicon oxide having the general formula: SiOx wherein 1 ≤ x < 1.6 in an atmosphere containing organic gas or vapor at a temperature of 500 to 1,200°C.

10. The method of claim 9 wherein the organic gas or vapor pyrolyzes in a non-oxidizing atmosphere at a temperature of 500 to 1,200°C to produce graphite.

11. Method of claim 9 or 10 wherein the heat treatment is carried out in a fluidized bed reactor.

12. The method of claim 11 wherein in fluidized bed reaction, a fluidizing gas is flowed at a linear velocity u which is selected so as to satisfy 1.5 ≤ u/u_{mf} ≤ 5 wherein u_{mf} is a minimum fluidization velocity.

13. An electrode for a non-aqueous electrolyte secondary cell, comprising a layer of a material according to claim 7 or 8 on a current collector.

14. A secondary cell with non-aqueous electrolyte having an electrode comprising negative electrode material according to claim 7 or claim 8.

## Patentansprüche

1. Leitfähiges Siliciumoxidpulver, worin Siliciumoxidteilchen der allgemeinen Formel SiOx, worin gilt: 1 ≤ x < 1,6, auf ihrer Oberfläche mittels chemischer Gasphasenabscheidungsbehandlung mit einer leitfähigen Beschichtung überzogen sind.

2. Leitfähiges Siliciumoxidpulver nach Anspruch 1, worin bei einer Analyse der Siliciumoxidteilchen durch Festphasen-NMR (²⁹Si-DD/MAS) das Spektrum zwei separate Peaks aufweist, einen breiten Peak (A1) mit seiner Mitte bei -70 ppm und einen weiteren breiten Peak (A2) mit seiner Mitte bei -110 ppm, und das Flächenverhältnis zwischen diesen Peaks im Bereich 0,1 ≤ A1/A2 ≤ 1,0 liegt.

3. Leitfähiges Siliciumoxidpulver nach Anspruch 1 oder 2, worin die Siliciumoxidteilchen einen gewichtsmittleren Teilchendurchmesser D₅₀ von 0,01 bis 10 µm aufweisen.

4. Leitfähiges Siliciumoxidpulver nach Anspruch 1, 2 oder 3, worin die leitfähige Beschichtung eine Kohlenstoffbeschichtung ist.

5. Leitfähiges Siliciumoxidpulver nach Anspruch 4, worin die Menge an aufgetragenem Kohlenstoff 5 bis 70 Gew.-% des leitfähigen Siliciumoxidpulvers ausmacht.

6. Pulver nach einem der vorangegangenen Ansprüche mit einer elektrischen Leitfähigkeit von zumindest 1 x 10⁻⁶ S/m.

7. Negatives Elektrodenmaterial für eine Sekundärzelle mit nichtwässrigem Elektrolyten, welches ein leitfähiges Siliciumoxidpulver nach einem der Ansprüche 1 bis 6 umfasst.

8. Negatives Elektrodenmaterial für eine Sekundärzelle mit nichtwässrigem Elektrolyten, das ein Gemisch aus einem leitfähigen Siliciumoxidpulver nach einem der Ansprüche 1 bis 6 und 1 bis 60 Gew.-% eines leitfähigen Mittels umfasst, wobei das Gemisch einen Gesamtkohlenstoffgehalt von 25 bis 90 Gew.-% aufweist.

9. Verfahren zur Herstellung eines leitfähigen Siliciumoxidpulvers nach einem der Ansprüche 1 bis 6, das den Schritt des Wärmebehandelns von Siliciumoxidteilchen der allgemeinen Formel SiOx, worin gilt: 1 ≤ x < 1,6, in einer organisches Gas oder organischen Dampf enthaltenden Atmosphäre bei einer Temperatur von 500 bis 1.200 °C umfasst.

10. Verfahren nach Anspruch 9, worin das organische Gas oder der organische Dampf in einer nichtoxidierenden Atmosphäre bei einer Temperatur von 500 bis 1.200 °C pyrolysiert, wodurch Graphit gebildet wird .

11. Verfahren nach Anspruch 9 oder 10, worin die Wärmebehandlung in einem Fließbettreaktor durchgeführt wird.

12. Verfahren nach Anspruch 11, worin bei einer Fließbettreaktion ein Wirbelgas mit einer Lineargeschwindigkeit u strömen gelassen wird, die so gewählt ist, dass gilt: 1,5 ≤ u/u_{mf} ≤ 5, worin u_{mf} die Minimalfluidisierungsgeschwindigkeit ist.

13. Elektrode für eine Sekundärzelle mit nichtwässrigem Elektrolyten, die eine Schicht aus einem Material nach Anspruch 7 oder 8 auf einem Stromabnehmer umfasst.

14. Sekundärzelle mit nichtwässrigem Elektrolyten mit einer Elektrode, die ein negatives Elektrodenmaterial nach Anspruch 7 oder Anspruch 8 umfasst.

## Revendications

1. Poudre conductrice d'oxyde de silicium dans laquelle des particules d'oxyde de silicium ayant la formule générale : SiOₓ où 1 ≤ x < 1,6 sont couvertes sur leurs surfaces par un revêtement conducteur par un traitement de dépôt chimique en phase vapeur.

2. Poudre conductrice d'oxyde de silicium selon la revendication 1, dans laquelle lorsque les particules d'oxyde de silicium sont analysées par RMN à l'état solide (²⁹Si DD/MAS), le spectre contient deux pics distincts, un pic large (A1) centré à -70 ppm et un autre pic large (A2) centré à - 110 ppm, et un rapport d'aire de ces pics se situe dans la plage : 0,1 ≤ A1/A2 ≤ 1,0.

3. Poudre conductrice d'oxyde de silicium selon la revendication 1 ou 2, dans laquelle les particules d'oxyde de silicium ont un diamètre moyen de particule en poids D₅₀ de 0,01 à 10 µm.

4. Poudre conductrice d'oxyde de silicium selon la revendication 1, 2 ou 3, dans laquelle le revêtement conducteur est un revêtement de carbone.

5. Poudre conductrice d'oxyde de silicium selon la revendication 4, dans laquelle la quantité de carbone revêtu est de 5 à 70 % en poids de la poudre conductrice d'oxyde de silicium.

6. Poudre selon l'une quelconque des revendications précédentes, présentant une conductivité électrique d'au moins 1 x 10⁻⁶ S/m.

7. Matériau d'électrode négative pour pile secondaire à électrolyte non aqueux, comprenant la poudre conductrice d'oxyde de silicium selon l'une quelconque des revendications 1 à 6.

8. Matériau d'électrode négative pour pile secondaire à électrolyte non aqueux, comprenant un mélange de la poudre conductrice d'oxyde de silicium selon l'une quelconque des revendications 1 à 6 et de 1 à 60 % en poids d'un agent conducteur, le mélange présentant une teneur totale en carbone de 25 à 90 % en poids.

9. Procédé de préparation de la poudre conductrice d'oxyde de silicium selon l'une quelconque des revendications 1 à 6, comprenant l'étape consistant à appliquer un traitement thermique à des particules d'oxyde de silicium de formule générale : SiOₓ où 1 ≤ x < 1,6 dans un atmosphère contenant un gaz organique ou de la vapeur à une température de 500 à 1 200 °C.

10. Procédé selon la revendication 9, dans lequel le gaz ou la vapeur organique subit une pyrolyse dans une atmosphère non oxydante à une température de 500 à 1 200 °C pour produire du graphite.

11. Procédé selon la revendication 9 ou 10, dans lequel le traitement thermique est effectué dans un réacteur à lit fluidisé.

12. Procédé selon la revendication 11, dans lequel dans la réaction à lit fluidisé, un gaz fluidisant est mis en circulation à une vitesse linéaire u qui est choisie de sorte à satisfaire 1, 5 ≤ u/u_{mf} ≤ 5 où u_{mf} est une vitesse de fluidisation minimale.

13. Electrode pour pile secondaire à électrolyte non aqueux, comprenant une couche de matériau selon la revendication 7 ou 8 sur un collecteur de courant.

14. Pile secondaire avec électrolyte non aqueux comportant une électrode comprenant un matériau d'électrode négative selon la revendication 7 ou la revendication 8.
